# EUROPEAN PATENT APPLICATION

(11) **EP 1 703 657 A1**
(43) Date of publication of application: **20.09.2006**
(21) Application number: 04700768.7
(22) Date of filing: 08.01.2004
(51) Int. Cl.: H04L 1/00, H04B 7/26

(54) **EXTRA ERROR CORRECTING METHOD FOR ZAPPING STREAM TS PACKET**

(71) Applicant: Matsushita Electric Industries Co., Ltd., Kadoma-shi, Osaka 571-8501 (JP)
(72) Inventor: SCHEID, Albrecht, Monzastrasse 4C, 63225 Langen (DE); KURSAWE, Thomas, Monzatrasse 4C, 63225 Langen (DE); USUKI, Izumi, c/o Matsushita El.Ind.Co.Ltd.IPROC, 1-chome,Chuo-ku,Osaka-shi,Osaka 540-6319 (JP); KAGEYAMA, Sadashi, c/o Matsu.Elec.Ind.Co Ltd, 1-chome,Chuo-ku,Osaka-shi,Osaka 540-6319 (JP); KISODA, Akira, c/o Matsu.Elec.Ind.Co.Ltd, 1-chome,Chuo-ku,Osaka-shi,Osaka 540-6319 (JP)
(74) Representative: Eisenführ, Speiser & Partner
(86) International application number: PCT/JP2004/000069
(87) International publication number: WO 2005/067191

(57) **Abstract**

Although the capacity of a packet is reduced, a parity code generated by a shortened error correction code of RS (255,191) is inserted into a private data field of an adaptation field of a TS packet. In the adaptation field, as positions where the parity codes are inserted, two positions can be used. The first position is a "stuffing byte" field the length of which is indirectly known on the basis of an adaptation field length field. The second position is a "transport private data" field the length of which can be directly described by a transport private data length field.

## Description

### FIELD OF THE INVENTION

The present invention relates to digital broadcasting for a mobile terminal (Digital Video Broadcasting - Handheld (DVB-H)) and, more specifically, to an error correction mechanism for solving problems in adverse conditions of a mobile environment, such as channel fading, carrier interference, and other physical problems.

### DESCRIPTION OF THE RELATED ART

A mobile terminal of DVB-H receives a DVB-H audio/video service of a transport stream transmitted by a burst. For example, 2 or 3-second audio/video contents are transmitted in a burst for less than 0.5 seconds. The transmission performed by the burst is very effective for electric power saving of a receiver. In the receiver, power is supplied to a receiving unit in only a burst transmission period in which a desired service is transmitted to save a battery power consumption by a considerable amount.

However, in this scheme, when a user tries to perform zapping in the same transmission channel or different transmission channels, in order to receive a selected service to reproduce the service, a receiver must have the next burst in which the corresponding service is transmitted. For example, when a burst is transmitted at a 5-second cycle, an average of about 2.5 seconds and 5 seconds at the most are required until reproduction of a selected service is started to display an image or voice. A burst cycle longer than 9 seconds may be used for electric power saving.

Therefore, a rate in zapping is considerably lower than a rate of channel switching of a television or the like at home.

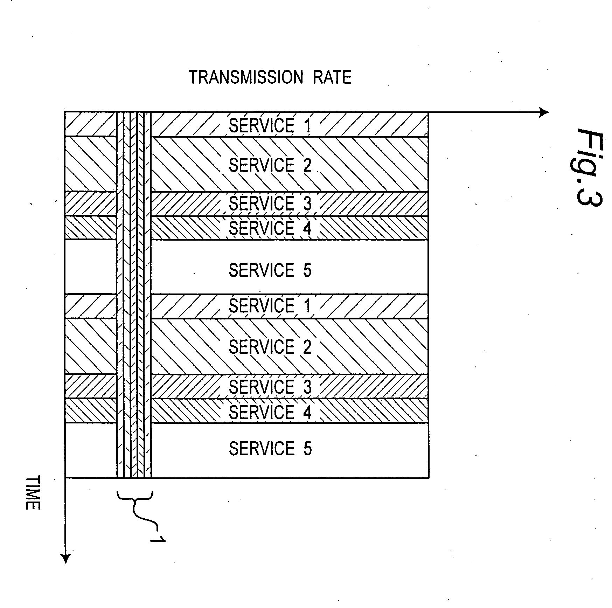

A technique of a zapping stream described in Japanese Patent Application No. 2003-370550 considerably improve a zapping rate. In addition to a burst, a continuous low-rate data stream (to be referred to as a zapping stream hereinafter) of an audio/video service is adopted. As shown in Fig. 3, a zapping stream is multiplexed on a transport stream.

The zapping stream transmits information related to a DVB-H service in the same transport stream by using a very low data rate. For example, the information includes text information related to video/audio contents, a still image, and a service or a combination of these pieces of information.

When continuously transmitted zapping streams are received, a user can see, hear, and read the contents of a selected service before the burst of a selected service is received and displayed. Therefore, the user can rapidly determines whether the selected service is received or another service is received.

Transmission and reception of a zapping stream can be omitted when only a DVB-H service is received.

The zapping stream can also transmits contents (for example, a zapping stream of a still image and a zapping stream of a text) of formats of different types with respect to the same DVB-H service.

### SUMMARY OF THE INVENTION

A zapping stream requires error resistance which is almost equal to that of a related DVB-H service. In a channel having poor transmission quality, the error resistance is important especially in low-data-rate audio or the like. The DVB-H service is protected by an error protection mechanism called an MPE-FEC. A zapping stream, unlike the DVBH service, is not included in an MPE-FEC frame to secure short access time and compatibility because the zapping stream aims at an increase in speed. The zapping stream does not use the MPE-FEC.

Therefore, an error correction mechanism must be compatible with MPEG specification (MPEG2 Systems Specification) for a transport stream.

The present invention adopts an error correction mechanism to be added to a transport layer to improve error resistance of a zapping stream.

The present invention provides an error correction method (scheme) in a broadcasting system for a mobile terminal, wherein an error correction code of its own transport stream packet (TS packet) is stored in an adaptation field in the TS packet.

In an aspect of the present invention, the error correction code is stored in a stuffing byte field in an adaptation.

In an aspect of the present invention, the error correction code is stored in a transport private data field in an adaptation.

The present invention provides an error correction method (scheme) for zapping stream in a broadcasting system for a mobile terminal, wherein an error correction code of its own transport stream packet (TS packet) of a zapping stream is stored in an adaptation field in the TS packet.

In an aspect of the present invention, the error correction code is stored in a stuffing byte field in an adaptation.

In an aspect of the present invention, the error correction code is stored in a transport private data field in an adaptation.

The present invention includes a transmitter for performing the above method, a program for executing the above method, and a recording medium for recording the program.

Although the capacity of a packet is reduced, a parity code generated by a shortened error correction code of RS (255,191) is inserted into the adaptation field of the TS packet.

In this manner, with respect to an error which cannot be corrected by an RS (255,239) decoder serving as a current standard DVB-T channel decoder, the error correction codes can be used to correct an error of its own TS packet. In a transmission path having poor quality, since a PID of a TS packet is not always correct, the RS (255,239) decoder tries to correct all TS packets each having 8 or more errors. The RS (255,191) decoder is mounted on a DVBH receiver corresponding to the MPE-FEC, and can be used in an additional error correction mechanism for zapping stream according to the present invention.

Note that a TS packet length of 188 bytes does not change, and a payload length of a TS packet decreases because an RS error correction code is inserted into the TS packet.

According to the present invention, without adding a special decoding module, error resistance can be improved while keeping short access time and compatibility of a zapping stream.

In reception of a burst, when the burst is lost due to a temporary adverse receiving condition, a video cannot be reproduced by a receiver for several seconds. However, when the condition immediately becomes good, since a still image is transmitted in the zapping stream, not a blackout screen or a freezed image but a related still image can be displayed for time until the next burst is received.

### BRIEF DESCRIPTION OF THE DRAWINGS

The present invention will become readily understood from the following description of preferred embodiments thereof made with reference to the accompanying drawings, in which like parts are designated by like reference numeral and in which:
Fig. 1 is a diagram for explaining a structure of a transport packet in a first embodiment of the present invention;
Fig. 2 is a diagram showing a structure of an adaptation field and an insertion position of a parity code in the first embodiment of the present invention; and
Fig. 3 is a diagram for explaining a conventional art of the present invention.

### DESCRIPTION OF THE PREFERRED EMBODIMENTS

An embodiment of the present invention will be described below with reference to the accompanying drawings. The present invention will be described by using the following embodiments and the drawings. This description, however, aims at exemplification and the present invention does not intend to be limited to the embodiments and the drawings. (Embodiment 1)

All pieces of information of terrestrial digital broadcasting (DVB-T) are transmitted in transport streams (TS). Each transport stream consists of a packet having a length of 188 bytes.

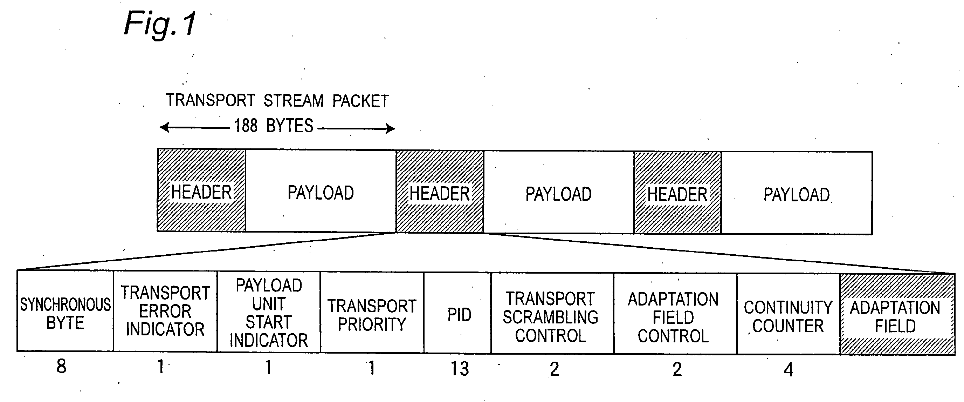

(see Fig. 1). In each of these packets, an additional field called together with a payload or an adaptation field is subsequent to a 4-byte packet header. Whether the adaptation field is inserted is shown in the header of a TS packet. The following three available formats are related to insertion of the adaptation field.
1. No adaptation field (only payload).
2. Only adaptation field (no payload).
3. Payload is subsequent to adaptation field.

In the present invention, the format 3 "payload is subsequent to adaptation field" is used. The adaptation field has a variable length. Information of the length is described in its field. Therefore, a byte string having an arbitrary length can be inserted into the adaptation field.

In a zapping stream, use of an adaptation field for error correction or use of a stuffing byte in the adaptation field does not adversely affect another service.

This is because unique PIDs are given to TS packets of all DVB-H services, respectively. The PIDs are packet identification numbers which are included in TS packet headers and unique to all the services. The PIDs are given to the TS packet headers of all the TS packets (see Fig. 1).

Use of an adaptation field must not adversely affect another service or the like. However, a description in a private data field of the adaptation field is not included in the specification of a current MPEG-SYSTEMS, a DVB-H TS packet does not hinder a service by using the field in the adaptation field.

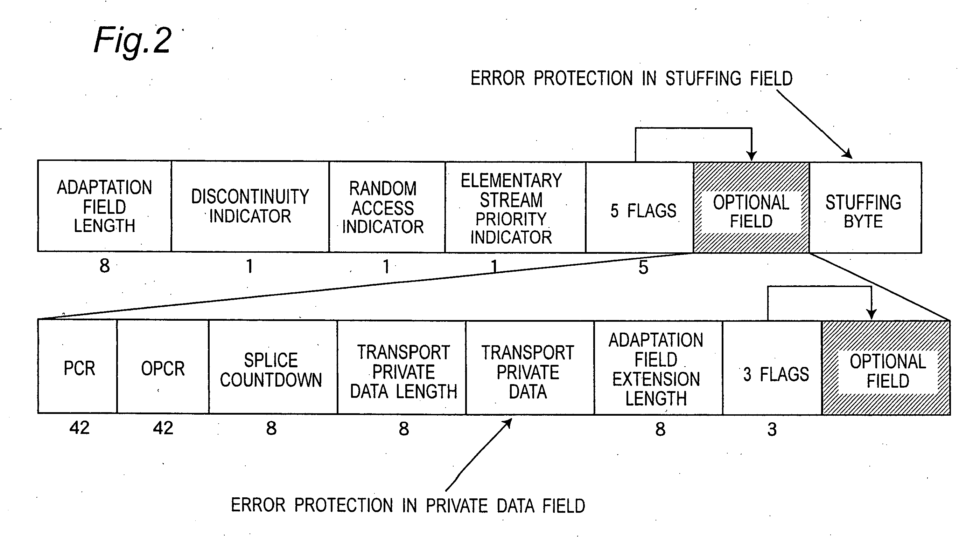

Fig. 2 is a diagram showing a structure of an adaptation field and a position where an additional error correction code is inserted.

In the adaptation field, as the positions where additional error correction codes are inserted, two positions can be used. The first position is a "stuffing byte" field the length of which is indirectly known on the basis of an adaptation field length field. The second position is a "transport private data" field the length of which can be directly described by a transport private data length field.

A transmitter inserts bytes for securing fixed-length regions in transport private data fields into all TS packets which transmit zapping streams in advance.

On the basis of a complete TS packet which secures the region, for example, a shortened error correction code of RS (255,191) is calculated. The calculated parity code is stored in a byte position for securing a region in the adaptation field.

On the receiver side, the stored parity code is used to correct errors the number of which is not more than a predetermined number in the TS. The correctable number of errors is determined by the number of error correction codes to be used. A receiver which cannot use the error correction code may eliminate the bytes.

An error correction method according to the present invention is useful for reinforcement of error resistance of a zapping stream of DVB-H.

## Claims

1. An error correction method in a broadcasting system for a mobile terminal, wherein
an error correction code of its own transport stream packet (TS packet) is stored in an adaptation field in the TS packet.

2. The error correction method according to claim 1, wherein the error correction code is stored in a stuffing byte field in an adaptation.

3. The error correction method according to claim 1, wherein the error correction code is stored in a transport private data field in an adaptation.

4. An error correction method for a zapping stream in a broadcasting system for a mobile terminal, wherein
an error correction code of its own transport stream packet (TS packet) of a zapping stream is stored in an adaptation field in the TS packet.

5. The error correction method according to claim 1, wherein the error correction code is stored in a stuffing byte field in an adaptation.

6. The error correction method according to claim 1, wherein the error correction code is stored in a transport private data field in an adaptation.
